(19) Europäisches Patentamt
European Patent Office
Office européen des brevets

(11) EP 1 557 261 A1

(12) **EUROPEAN PATENT APPLICATION**

(43) Date of publication:
**27.07.2005 Bulletin 2005/30**

(51) Int Cl.[7]: **B32B 27/28**, C08F 8/28

(21) Application number: **04001287.4**

(22) Date of filing: **22.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Kuraray Specialities Europe GmbH**
**65926 Frankfurt am Main (DE)**

(72) Inventors:
- **Papenfuhs, Bernd, Dr.**
  **63179 Obertshausen (DE)**
- **Steuer, Martin, Dr.**
  **65835 Leiderbach (DE)**
- **Kumaki, Yousuke**
  **Kurashiki, Okayama, 710-8622 (JP)**

(74) Representative: **Kisters, Michael Marcus**
**Kuraray Specialities Europe GmbH, Patents and Trademarks, Geb.362.Mülheimer Strasse 26**
**53840 Troisdorf (DE)**

(54) **Polyvinyl acetal and its use**

(57) The present invention concerns a vinyl acetal based polymer obtainable through acetalization of a vinyl alcohol based polymer that has a degree of polymerization of from 100 to 8000 and a saponification degree of from 80 to 99.99 mol%, wherein the vinyl acetal based polymer comprises at least 1.3 mol% of 5-membered acetal rings.

EP 1 557 261 A1

## Description

The present invention relates to a polyvinyl acetal, and to an interlayer film for laminated glass, a binder for ceramic forming, a binder for ink or paint and a thermally-processable photographic material that comprise it.

It has been known since long ago that polyvinyl acetal is obtained by acetalyzing polyvinyl alcohol with an aldehyde compound under an acidic condition. Polyvinyl alcohol generally has vinyl alcohol units and vinyl ester units. Therefore, polyvinyl acetal obtained through acetalization of such polyvinyl alcohol comprises at least three types of monomer units that include vinyl acetal units in addition to the two types of monomer units of the starting polyvinyl alcohol. Recently, many different types of polyvinyl alcohol have been proposed, and many different types of polyvinyl acetal have been known by combining such different types of polyvinyl alcohol with various types of aldehyde.

Above all, polyvinyl formal to be produced from polyvinyl alcohol and formaldehyde, polyvinyl acetal to be produced from polyvinyl alcohol and acetaldehyde, and polyvinyl butyral to be produced from polyvinyl alcohol and butylaldehyde stand the essential situation in trade.

In particular, polyvinyl butyral is used not only for interlayer films for windowpanes for automobiles and buildings but also in other various industrial fields of binder for ceramic forming, photosensitive materials, dispersant for ink, etc.

Polyvinyl butyral has a hydrophilic hydroxyl group and a hydrophobic butyl acetal group and is therefore hydrophilic and hydrophobic, and it is much used in various fields as above. In particular, the hydroxyl group in the molecule of polyvinyl butyral plays an important role, for example, in the adhesiveness of the polymer to glass and in the binder force thereof to ceramics, but, on the other hand, it causes some problems in that it readily absorbs moisture in air and, when films formed of polyvinyl butyral are stored for a long term, the plasticizer in the films may readily bleed out. Therefore, the polymer is desired to overcome the problems and to satisfy the requirements for it. Specifically, polyvinyl butyral is desired to have improved waterproofness and improved compatibility with plasticizer, still having the advantages intrinsic to it.

Polyvinyl butyral is widely used as interlayer films in laminate glass for windowpanes for automobiles and buildings. These days, however, the demand for further improving the properties of laminate glass is increasing more and more. For example, when laminate glass is exposed to high humidity for a long time, it may face some problems in that water may penetrate into it through its edges and it may whiten as its compatibility with plasticizer is not good. To solve these problems, various proposals have been made. For example, special silicone oil is additionally used (as in JP-A 7-314609), or triethylene glycol di-2-ethylhexanoate is used as a plasticizer (as in WO00/18698). However, the plasticizer, triethylene glycol di-2-ethylhexanoate is problematic in that its application to conventional polyvinyl butyral is limited to only some particular compositions, as so disclosed in JP-T 2001-515527 (the term "JP-T" as used herein means a published Japanese translation of a PCT application).

Furthermore, the polyvinyl butyrals of prior art show a remarkable degradation in molecular weight as a result of thermal or mechanical stress. Such stress is usually applied during the extrusion of the polyvinyl butyrals into sheets.

Using polyvinyl acetal modified with an $\alpha$-olefin for interlayer films for laminate glass is proposed in, for example, JP-A 63-79741. On the technical level in those days, however, no one has taken the above-mentioned problems into consideration and, at present, therefore, no one has succeeded in solving the problems.

In the field of binder for ceramic forming, polyvinyl acetal is used, for example, as a forming binder in the process of producing ceramic laminate capacitors or producing ceramic substrates for electronic circuits. In particular, polyvinyl acetal is much used as a binder in producing ceramic green sheets.

These days, in particular, precision electric appliances such as mobile phones and notebook-size personal computers are desired to be small-sized and lightweight, and small-sized, electric and electronic parts with a good performance for these are desired.

For example, small-sized, large-capacity ceramic laminate capacitors are desired, for which various methods have been tried for more reducing the thickness of the electrode part or the ceramic part and for further increasing the capacity. From the technical viewpoint, it is a matter of great importance to thin the ceramic green sheets for them. For reducing the thickness of the sheets, ceramic powder having a small particle size must be used as the starting material. However, ceramic powder having such a reduced particle size shall have an increased surface area and will therefore readily aggregate. Accordingly, the ceramic powder of the type causes some problems in that the surface of the ceramic green sheets formed of it is often roughened, homogeneous ceramic green sheets are difficult to obtain, and the mechanical strength of thin sheets is low.

For the binder in producing ceramic green sheets, known is vinyl butyral based polymer (for example, see JP-A 3-197511). However, using such a vinyl butyral based polymer binder in producing laminate capacitors is problematic in that the binder could not be well decomposed in the step of degreasing calcinating and some decomposition products of the binder may remain in the ceramic green sheets, and, as a result, the electric properties of the laminate capacitors produced will be thereby worsened.

To solve the problem, for example, a vinyl butyral based polymer graft-copolymerized with an alkyl (meth)acrylate monomer has been proposed (for example, see JP-A 2001-172553). The proposed vinyl butyral based polymer is produced through post-reaction of a vinyl butyral based polymer obtained through butyralization of vinyl alcohol based polymer, and is therefore problematic in that its production cost is high.

As one method of producing vinyl acetal based polymer, widely known is a so-called precipitation process, in which a vinyl alcohol based polymer is dissolved in water under heat and then an acid and an aldehyde are added thereto for condensation at a relatively low temperature (not higher than about 30°C) to form a granular vinyl acetal based polymer precipitate (for example, see JP-A 56-82806).

For dissolving vinyl alcohol based polymer in water under heat within a short period of time in this process, it will be desirable that the system temperature is elevated. However, if the water temperature is elevated high at once (up to about 50°C or higher), then the vinyl alcohol based polymer may often form lumps and will be rather difficult to dissolve in water. Accordingly, a method is employed which comprises keeping the water temperature low (not higher than about 40°C) in the step of putting vinyl alcohol based polymer into water to thereby prevent the polymer from forming lumps, and thereafter elevating the water temperature up to 90°C or higher. However, this method is problematic in that the step of elevating the water temperature up to 90°C takes a long time. Still another problem with the method is that the step of cooling the aqueous vinyl alcohol based polymer solution that has been heated up to 90°C or higher, to a lower temperature range (not higher than about 30°C) for ordinary acetalization also takes a long time.

To solve these problems, a method for producing vinyl acetal based polymer has been proposed, which comprises acetalyzing a vinyl alcohol based polymer having a 1,2-glycol bond content of at most 1.7 mol% in a mode of precipitation acetalization (for example, see JP-A 9-31124). According to the proposed method, the vinyl alcohol based polymer having a 1,2-glycol bond content of at most 1.7 mol% is put into warm water at 45 to 65°C prior to the acetalization thereof, and then this is dissolved therein at a temperature not lower than 90°C. Still, the method could not always produce the desired result in point of shortening the time needed in preparing the aqueous vinyl alcohol based polymer solution and also shortening the time needed in cooling the aqueous vinyl alcohol based polymer solution having been heated at a temperature not lower than 90°C to a low temperature range (not higher than about 30°C) for ordinary acetalization.

In addition, when vinyl alcohol based polymer is dissolved in water under heat, it generally gives a large amount of bubbles while stirred and, as a result, it becomes a foamed aqueous solution. This tendency is especially remarkable in vinyl alcohol based polymer having a saponification degree of at most 90 mol%. Accordingly, for example, when an aqueous solution of vinyl alcohol based polymer having a saponification degree of at most 90 mol% is acetalized, then bubbles may adhere to the upper wall area of the reactor to significantly lower the thermal efficiency of the reactor and, as the case may be, the acetalization will be uneven. To remove the obstruction, a defoaming agent of, for example, urethane condensates or organosilicon compounds is used, but it may remain in the vinyl acetal based polymer produced and may cause a serious problem in some applications of the polymer.

These problems are considered especially serious for small-sized and lightweight electric and electronic appliances that are desired these days. For example, JP-A 63-79752 discloses some examples of α-olefin-modified polyvinyl acetal. On the technical level in those days, however, no one has taken the above-mentioned problems into consideration and, at present, therefore, no one has succeeded in solving the problems.

In the paint field of its industrial applications, polyvinyl acetal is used for paint for automobiles, baking enamel, shop primer, wash primer, adhesive lacquer, insulating coat on tar or nicotine, paint for plastics, nitrocellulose lacquer, paper varnish, etc. For binder for printing ink for wrapping or packaging materials, used is polyvinyl butyral of low solution viscosity. The printing ink that comprises the polymer well adheres to organic and inorganic substrates and is therefore suitable for prints on polyolefin films, metal foil, cellulose acetate films, polyamide films and polystyrene films.

These days, in particular, printers are driven at high speed in many cases. Therefore, for realizing such high-speed driving of printers, it is said that the printing ink must have a high pigment content at its desired viscosity, and, even if the printed ink film is thin, the print color intensity must be high. In general, for increasing the pigment content of printing ink, it is important to lower the solution viscosity thereof. For lowering the solution viscosity of printing ink, use of polyvinyl acetal having a low degree of polymerization may be taken into consideration. However, using polyvinyl acetal of low polymerization, which is produced through acetalization of completely hydrolyzed polyvinyl alcohol, is problematic in that the aqueous solution of the polyvinyl acetal readily gels and the pigment content of ink with the polymer could not increase.

To solve these problems, for example, proposed are a method of using polyvinyl butyral produced from polyvinyl alcohol having a specific degree of hydrolysis (as in JP-A 11-349889), and a method of using polyvinyl acetal produced from polyvinyl alcohol having 1-alkylvinyl alcohol units and 1-alkylvinyl acetate units (as in JP-T 2000-503341). These methods may be effective in some degree for solving the problems as above, but could not always lead to satisfactory results.

Thermally-developable photographic materials are now in practical use for X-ray photographs in the field of medical therapy, since they may be simply processed for development not producing any excess chemical wastes, as compared with conventional, wet-processable silver halide photographic materials. Such thermally-developable photographic materials may be fabricated by applying an organic silver salt, a reducing agent and a silver halide that is kept in catalytic contact with organic silver ions, on a support such as plastic film by the use of a film-forming binder such as polyvinyl acetal.

The thermally-developable photographic materials of the type have some problems in that the storage stability of the coating liquids to be used in fabricating them is often poor, the sensitivity of the photographic materials themselves is often not so good and the storage stability of the images formed after development is often poor. To solve these problems, for example, a method of using polyvinyl acetal that has a specific ionic group (JP-A 2001-222089) and a method of combining two different types of polyvinyl acetal each having a specific degree of polymerization (JP-A 2002-201215) have been proposed. At present, however, these method could not satisfactorily solve the problems as above.

Taking into consideration the prior art, it is an object of this invention to make available new vinyl acetal based polymers having improved pyrolyzability.

Further, a second object of the invention is to provide a method for producing a vinyl acetal based polymer in which the time needed in preparing an aqueous vinyl alcohol based polymer solution is shortened and the time needed in cooling the aqueous vinyl alcohol based polymer solution to a temperature range for acetalization is also shortened, and, in addition, the amount of bubbles that may exist in the aqueous vinyl alcohol based polymer solution is reduced to thereby improve the workability and the efficiency of the method.

Furthermore, an object of the invention is to provide a polyvinyl acetal having improved waterproofness and improved compatibility with plasticizer and still having the properties characteristic of the polymer, and provides an interlayer film for laminated glass, laminated glass with the interlayer film, a binder for ceramic forming, a binder for ink or paint and a thermally-processable photographic material that comprise it.

Furthermore, the new polyvinyl acetal are supposed to be produceable in a simple and cost favorable way.

These as well as other not explicitly mentioned tasks, which, however, can easily be derived or developed from the introductory part, are solved by vinyl acetal based polymers with all of the characteristics of Claim 1. Expedient modifications of the fluids in accordance with the invention are described in the claims that refer back to Claim 1.

The vinyl acetal based polymer of the invention comprising at least 1.3 mol% of 5-membered acetal rings, which is obtainable through acetalization of a vinyl alcohol based polymer that has a degree of polymerization of from 100 to 8000 and a saponification degree of from 80 to 99.99 mol%, is well pyrolyzable.

The vinyl acetal based polymer of the invention is extremely useful as a binder in forming ceramic green sheets that are used in producing ceramic laminate capacitors and producing ceramic substrates for electronic circuits. In addition, the vinyl acetal based polymer of the invention is favorable for interlayer films for safety glass, binders for ink or paint, thermal photographic materials, metal primers, etc.

Furthermore, the polyvinyl acetals of the present invention show a reduced degradation in molecular weight as a result of thermal or mechanical stress.

The polyvinyl acetal of the invention is well balanced in point of its hydrophilicity and hydrophobicity, its waterproofness is good and its compatibility with plasticizer is good.

The interlayer film for laminated glass of the invention comprises, as the essential ingredient, the polyvinyl acetal of the type, and its advantages are that its adhesiveness to glass sheets to be laminated and its whitening resistance at the edges of laminated glass is good.

The binder for ceramic forming of the invention makes it possible to produce homogeneous ceramic green sheets having a high mechanical strength even when ceramic powder having a small particle size is used as the starting material for thinned ceramic green sheets.

The binder for ink or paint of the invention makes it possible to produce ink or paint that has a lowered solution viscosity and an increased solid content (that is, an increased pigment content) and has good ink dispersibility.

The advantages of the thermally-developable photographic material of the invention are that the storage stability of the coating liquids for it is good, its sensitivity in development is good and the storage stability of the image formed thereon through development is good.

According to the method for producing a vinyl acetal based polymer of the invention, both the time needed in preparing an aqueous vinyl alcohol based polymer solution and the time needed in cooling the aqueous vinyl alcohol based polymer solution to a temperature range for acetalization may be shortened, and, in addition, the amount of bubbles that may exist in the aqueous vinyl alcohol based polymer solution may be reduced. The workability in the method is much improved and the method gives a vinyl acetal based polymer at high efficiency.

PVA for use in producing the vinyl acetal based polymer of the invention has a degree of polymerization of from 100 to 8000, preferably from 150 to 6000, more preferably from 180 to 5000, even more preferably from 200 to 4500. If the degree of polymerization is smaller than 100 or larger than 8000, PVA may be difficult to produce on an industrial scale.

In the invention, the degree of polymerization of PVA means a viscosity-average degree of polymerization thereof, and it is measured according to JIS-K6726. Concretely, PVA is hydrolyzed to a saponification degree of at

least 99.5 mol%, and purified, and its degree of polymerization is derived from the intrinsic viscosity [η] thereof measured in water at 30°C, according to the following equation:

$$P = ([\eta] \times 1000/8.29)^{(1/0.62)}$$

PVA to be the starting material for the vinyl acetal based polymer of the invention has a saponification degree of from 80.0 to 99.99 mol%, preferably from 82 to 99.9 mol%, more preferably from 84 to 99.8 mol%, even more preferably from 85 to 99.6 mol%. If the saponification degree is lower than 80 mol%, it may be ineffective for shortening the time needed in preparing an aqueous solution of PVA; but if larger than 99.99 mol%, PVA of the type will be difficult to produce on an industrial scale.

The vinyl acetal based polymer of the invention comprises at least 1.3 mol% of 5-membered acetal rings, especially from 1.5 to 3.5 mol%, preferably from 1.85 to 2.9 mol%, more preferably from 1.9 to 2.8 mol% based on the total content of vinyl alcohol units, which may be free or part of a 5- or 6- membered ring.

The 5-membered acetal ring content of the vinyl acetal based polymer may be obtained from the peaks in NMR. A sample is dissolved in DMSO-D6 which contain 1.5 % by weight of Chromium(III) acetylacetonate and the resulting sample is subjected to $^{13}C$ NMR at 80°C (with JEOL GX-500). In the Non-NOE-spectrum the peaks derived from 5-membered acetal rings (carbon atom bridging the two oxygen atoms in the 5-membered acetal ring) are in 102 to 103 ppm (integral value B), from 6-membered acetal rings (carbon atom bridging the two oxygen atoms in the 6-membered acetal ring) are in 90 to 101 ppm (integral value C) and from methin carbon atoms in the main chain are in 60 to 80 ppm (integral value A). The 5-membered acetal ring content of vinyl acetal based polymer is calculated according to the equation mentioned below.

$$\text{5-membered acetal ring content (mol\%)} = 100 \times 2 \times B/A.$$

$$\text{6-membered acetal ring content (mol\%)} = 100 \times 2 \times C/A$$

The molar ratio of the 5-membered acetal rings to the 6-membered acetal rings ranges preferably from 0.019 to 0.053, more preferably 0,027 to 0,040.

According to a very special embodiment of the present invention, the vinyl alcohol based polymer (hereinafter this may be abbreviated as PVA) for use in producing the vinyl acetal based polymer of the invention has preferably a 1,2-glycol bond content of at least 1.5 mol%, especially from 1.8 to 3 mol%, more preferably from 1.85 to 2.9 mol%, most preferably from 1.9 to 2.8 mol%.

The 1,2-glycol bond content of PVA may be obtained from the peaks in NMR. Concretely, PVA is hydrolyzed to a saponification degree of at least 99.9 mol%, then fully washed with methanol, and then dried at 90°C under reduced pressure for 2 days to prepare a sample for analysis. The sample is dissolved in DMSO-D6, some drops of trifluoroacetic acid are added thereto, and the resulting sample is subjected to 500 MHz proton NMR (with JEOL GX-500) at 80°C. From the peaks derived from all methines in the vinyl alcohol units in PVA (3.2 to 4.0 ppm, integral value A) and from the peak derived from one methine in the 1,2-glycol bond among them (3.25 ppm, integral value B), the 1,2-glycol bond content of PVA is calculated according to the equation mentioned below.

$$\text{1,2-Glycol bond content (mol\%)} = 100 \times B/A.$$

[

In the same manner as above, the 1,2-glycol bond content of vinyl acetal based polymer may also be obtained. Concretely, vinyl acetal based polymer is reacted with hydroxyamine hydrochloride in an alcohol solvent, and the resulting reaction product is well re-precipitated and purified in water/alcohol to give PVA. After this, the PVA is processed in the same manner as above to prepare a sample for analysis, and this is analyzed to determine the 1,2-glycol bond content thereof.

According to a preferred embodiment of the present invention the polyvinyl acetal may contain from 0.01 to 15 mol%, more preferably from 2 to 10 mol%, even more preferably from 3 to 7 mol%. of α-olefin units. The molar ratio of the 5-membered acetal rings to the α-olefin units ranges preferably from 2:1 to 1:15, more preferably from 1:1 to 1:10.

The α-olefin units for PVA include, for example, linear α-olefins having at most 10 carbon atoms such as ethylene, propylene, 1-butene, 1-pentene, 1-hexene, 1-heptene, 1-octene, 1-nonene, 1-decene; and branched α-olefins having at most 10 carbon atoms such as isobutene. Of those, preferred are α-olefins having at most 4 carbon

atoms, and more preferred is ethylene.

The amount of the α-olefin units in PVA may be obtained, for example, according to the methods mentioned below.

(1) A PVA precursor, polyvinyl ester with α-olefin units is well re-precipitated and purified in n-hexane/acetone repeatedly at least 3 times, and then dried at 80°C under reduced pressure for 3 days to prepare a sample for analysis. For example, when the type of the α-olefin units in PVA is ethylene, the sample for analysis is dissolved in DMSO-d6 and its proton NMR is measured at 80°C. The ethylene content of PVA is calculated from the peak (4.7 to 5.2 ppm) derived from the main chain methine of vinyl ester and the peak (0.8 to 1.6 ppm) derived from the main chain methylene of ethylene and vinyl ester.

(2) PVA is heated in pyridine/acetic anhydride to thereby acetylate the hydroxyl group in PVA. Then, this is well re-precipitated and purified in water/acetone, and then dried at 80°C under reduced pressure for 3 days to prepare a sample for analysis. The α-olefin unit content of the sample is obtained in the same manner as in (1).

(3) Polyvinyl acetal is reacted with hydroxylamine hydrochloride in an alcohol solvent, and the resulting reaction product is well re-precipitated and purified in water/alcohol to give PVA. Thus obtained, PVA is heated in pyridine/acetic anhydride to thereby acetylate the hydroxyl group therein. Then, this is well re-precipitated and purified in water/acetone, and then dried at 80°C under reduced pressure for 3 days to prepare a sample for analysis. The α-olefin unit content of the sample is obtained in the same manner as in (1).

Preferably, PVA to be the starting material for the polyvinyl acetal of the invention contains from 0.02 to 5 mol% of carboxylic acid and lactone ring. In this case, the carboxylic acid includes its alkali metal salts, and the alkali metal includes potassium and sodium.

The molar ratio of the 5-membered acetal rings to the carboxylic acid and/or lactone ring groups ranges preferably from 100:1 to 1:2, more preferably from 50:1 to 1:1.

According to a preferred embodiment of the present invention the PVA to be the starting material for the polyvinyl acetal comprises α-olefin units and carboxylic acid and/or lactone ring groups. The molar ratio of the α-olefin units to carboxylic acid and/or lactone ring groups ranges preferably from 100:1 to 1:5, more preferably from 50:1 to 1:2.

For producing PVA with such carboxylic acid and lactone ring, for example, employable is (i) a method of hydrolyzing polyvinyl ester, which is prepared through copolymerization of a vinyl ester monomer such as vinyl acetate and a monomer having the ability to produce carboxylic acid and lactone ring, in a solution of alcohol or dimethylsulfoxide; (ii) a method of polymerizing a vinyl ester monomer in the presence of a carboxylic acid-having thiol compound such as mercaptoacetic acid or 3-mercaptopropionic acid, followed by hydrolyzing the resulting polyvinyl ester; (iii) a method of polymerizing a vinyl ester monomer such as vinyl acetate with chain transfer to the alkyl group of the vinyl ester monomer and the polyvinyl ester, followed by hydrolyzing the resulting highly-branched polyvinyl ester; (iv) a method of reacting a copolymer of an epoxy group-having monomer and a vinyl ester monomer with a carboxyl group-having thiol compound, followed by hydrolyzing the resulting product; or (v) a method of acetalyzing PVA with a carboxyl group-having aldehyde.

The vinyl ester monomer includes, for example, vinyl formate, vinyl acetate, vinyl propionate, vinyl valerate, vinyl caprate, vinyl laurate, vinyl stearate, vinyl benzoate, vinyl pivalate and vinyl versatate. Of those, preferred is vinyl acetate for obtaining PVA.

The monomer having the ability to produce carboxylic acid and lactone ring includes, for example, monomers with a carboxyl group derived from any of fumaric acid, maleic acid, itaconic acid, maleic anhydride or itaconic anhydride; acrylic acid and its salts, and acrylates such as methyl acrylate, ethyl acrylate, n-propyl acrylate and i-propyl acrylate; methacrylic acid and its salts, and methacrylates such as methyl methacrylate, ethyl methacrylate, n-propyl methacrylate and i-propyl methacrylate; acrylamide, and acrylamide derivatives such as N-methylacrylamide and N-ethylacrylamide; methacrylamide, and methacrylamide derivatives such as N-methylmethacrylamide and N-ethylmethacrylamide.

The content of carboxylic acid and lactone ring in PVA may be obtained from the peaks of the proton NMR pattern of PVA. Concretely, PVA is hydrolyzed to a degree of hydrolysis of at least 99.95 mol%, then well washed with methanol, and dried under reduced pressure at a temperature of 90°C for 2 days to prepare a PVA sample for analysis. Depending on the production methods of PVA, (i) to (v), the sample is analyzed according to the methods mentioned below.

In case of method (i):

The PVA sample for analysis is dissolved in DMSO-d6, and it is analyzed at 60°C through proton NMR. The

monomer content of acrylic acid, acrylates, acrylamide, acrylamide derivatives and the like is calculated in an ordinary manner from the peak (2.0 ppm) derived from the main chain methine; and the monomer content of methacrylic acid, methacrylates, methacrylamide, methacrylamide derivatives and the like is from the peak (0.6 to 1.1 ppm) derived from the methyl group directly bonding to the main chain. The monomer with a carboxyl group derived from fumaric acid, maleic acid, itaconic acid, maleic anhydride, itaconic anhydride or the like is determined as follows: The PVA sample for analysis in dissolved in DMSO-d6, some drops of trifluoroacetic acid are added thereto, and this is analyzed at 60°C through proton NMR. The monomer content may be calculated in an ordinary manner from the methine peak of the lactone ring (4.6 to 5.2 ppm).

In case of methods (ii) and (iv):

The content of carboxylic acid and lactone ring in PVA may be calculated from the peak (2.8 ppm) derived from the methylene that bonds to the sulfur atom.

In case of method (iii):

The PVA sample for analysis is dissolved in methanol-d4/$D_2O$ = 2/8, and it is analyzed at 80°C through proton NMR. The terminal carboxylic acid or its alkali metal salt methylene-derived peaks (structural formula 1 and structural formula 2 mentioned below) are assigned to 2.2 ppm (integral value A) and 2.3 ppm (integral value B); the terminal lactone ring methylene-derived peak (structural formula 3 mentioned below) to 2.6 ppm (integral value C); and the vinyl alcohol unit methine-derived peak to 3.5 to 4.15 ppm (integral value D). The content of carboxylic acid and lactone ring in PVA is calculated according to the following equation:

Content of carboxylic acid and lactone ring (mol%)

$$= 50 \times (A + B + C) \times (100 - Fn)/(100 \times D)$$

wherein Fn indicates the degree of α-olefin modification (mol%) of PVA.

(Structural formula 1)

$(Na)HOOCC\underline{H}_2CH_2CH_2-$

(Structural formula 2)

$NaOOCC\underline{H}_2CH_2CH(OH)-$

(Structural formula 3)

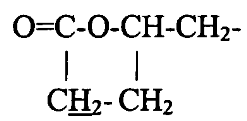

In case of (v):

The PVA sample for analysis is dissolved in DMSO-d6, and it is analyzed at 60°C through proton NMR. The content in question in PVA may be calculated in an ordinary manner, based on the peak, 4.8 to 5.2 ppm that is derived from the methine (structural formula 4 mentioned below) in the acetal moiety.

(Structural formula 4)

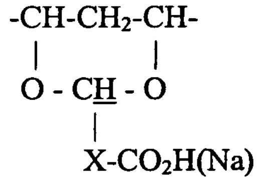

wherein X indicates a single bond or an alkyl residue having from 1 to 10 carbon atoms.

Not detracting from the advantages of the invention, PVA for use in the invention may contain any other monomer units than vinyl alcohol units, α-olefin units, vinyl ester units and the above-mentioned monomer units having the ability to produce carboxylic acid and lactone ring.

The additional monomer units include those derived from various monomer units, for example, N-vinylamides such as N-vinylacetamide, N-vinylpyrrolidone, N-vinylcaprolactam; vinyl ethers such as methyl vinyl ether, ethyl vinyl ether, n-propyl vinyl ether, i-propyl vinyl ether, n-butyl vinyl ether; hydroxyl group-having vinyl ethers such as ethylene glycol vinyl ether, 1,3-propanediol vinyl ether, 1,4-butanediol vinyl ether; allyl acetate, allyl ethers such as propyl allyl ether, butyl allyl ether, hexyl allyl ether; oxyalkylene group-having monomers; vinylsilanes such as vinyltrimethoxysilane; hydroxyl group-having α-olefins such as isopropenyl acetate, 3-buten-1-ol, 4-penten-1-ol, 5-hexen-1-ol, 7-octen-1-ol, 9-decen-1-ol, 3-methyl-3-buten-1-ol; monomers with a sulfonic acid group derived from ethylenesulfonic acid, allylsulfonic acid, methallylsulfonic acid, 2-acrylamido-2-methylpropanesulfonic acid or the like; and monomers with a cationic group derived from vinyloxyethyltrimethylammonium chloride, vinyloxybutyltrimethylammonium chloride, vinyloxyethyldimethylamine, vinyloxymethyldiethylamine, N-acrylamidomethyltrimethylammonium chloride, N-acrylamidoethyltrimethylammonium chloride, N-acrylamidodimethylamine, allyltrimethylammonium chloride, methallyltrimethylammonium chloride, dimethylallylamine, allylethylamine or the like. The content of the additional monomer units in PVA is generally at most 20 mol%, preferably at most 10 mol%, more preferably at most 5 mol%.

According to a preferred aspect of the present invention the PVA to be the starting material for the polyvinyl acetal comprises N-vinylamide units and carboxylic acid and/or lactone ring groups. The molar ratio of the N-vinylamide units to the carboxylic acid and/or lactone ring groups ranges preferably from 100:1 to 1:100, more preferably from 50:1 to 1:50.

Preferably, the PVA to be the starting material for the polyvinyl acetal comprises N-vinylamide units and α-olefin units. The molar ratio of the N-vinylamide units to the α-olefin units ranges preferably from 100:1 to 1:100, more preferably from 50:1 to 1:50.

Preferably, the PVA to be the starting material for the polyvinyl acetal comprises units being derived from monomers with a cationic group and α-olefin units. The molar ratio of the N units being derived from monomers with a cationic group to the α-olefin units ranges preferably from 100:1 to 1:100, more preferably from 50:1 to 1:50.

The molar ratio of the 5-membered acetal rings to units being derived from hydroxyl group-having vinyl ethers ranges preferably from 1:1 to 1:30, more preferably from 1:2 to 1:15.

Preparing PVA which is used in producing the vinyl acetal based polymer of the invention is not specifically defined, for which employable is any known method. Usually a PVA may be used having a high 1,2-glycol bond content as starting compound. For example, it includes (1) a method that comprises copolymerizing a vinyl ester based monomer and vinylene carbonate in such a controlled ratio that the 1,2-glycol bond content of the resulting copolymer may preferably fall within the range as above, followed by hydrolyzing the resulting vinyl ester based polymer; and (2) a method that comprises polymerizing a vinyl ester monomer under an increased pressure and at a temperature higher than the boiling point under atmospheric pressure of the polymerization solution, for example, at a temperature falling between 75 and 200°C, followed by hydrolyzing the resulting vinyl ester based polymer. In the latter method (2), the polymerization temperature preferably falls between 80 and 190°C, more preferably between 90 and 180°C.

The vinyl ester based monomer includes, for example, vinyl formate, vinyl acetate, vinyl propionate, vinyl valerate, vinyl caprate, vinyl laurate, vinyl stearate, vinyl benzoate, vinyl pivalate and vinyl versatate. Of those, preferred is vinyl acetate from the viewpoint of industrial production.

Polymerization of vinyl ester monomer may be effected in any known manner of, for example, bulk polymerization, solution polymerization, suspension polymerization or emulsion polymerization. Of those, generally employed is bulk polymerization of polymerizing the monomer in the absence of a solvent or solution polymerization of polymerizing it in a solvent such as alcohol. The alcohol that serves as a solvent in solution polymerization is, for example, a lower alcohol such as methyl alcohol, ethyl alcohol or propyl alcohol. The initiator for polymerization includes, for example, azo initiators such as 2,2'-azobisisobutyronitrile, 1,1'-azobis(cyclohexane-1-carbonitrile), 2,2'-azobis(N-butyl-2-methylpropionamide); and peroxide initiators such as benzoyl peroxide, t-butylperoxy-i-propyl monocarbonate.

PVA for use in the invention may be prepared by polymerizing a vinyl ester monomer such as vinyl acetate in the presence of a thiol compound such as 3-mercaptopropionic acid, 2-mercaptoethanol or n-dodecylmercaptan followed by hydrolyzing the resulting vinyl ester based polymer, and it is a terminal-modified PVA.

The vinyl ester based polymer prepared through polymerization of vinyl ester monomer is then hydrolyzed in an alcohol or dimethylsulfoxide solution in any known method.

In hydrolyzing the polyvinyl ester, an alkaline substance such as potassium hydroxide or sodium hydroxide is used for the catalyst. Preferably, the molar ratio of the alkaline substance falls between 0.004 and 0.5 to the vinyl ester units of the polymer, more preferably between 0.005 and 0.05. The alkaline substance may be added to the system in the initial stage of hydrolysis all at a time, or may be intermittently added thereto during hydrolysis.

The solvent to be used in hydrolysis of polyvinyl ester includes, for example, methanol, methyl acetate, dimethylsulfoxide and dimethylformamide. Of those solvents, preferred is methanol. Preferably, the water content of methanol to be used for the solvent is controlled to fall between 0.001 and 1 % by weight, more preferably between 0.003 and 0.9 % by weight, even more preferably between 0.005 and 0.8 % by weight.

In hydrolyzing the polyvinyl ester, the polymer concentration is preferably controlled to fall between 10 and 70 %, more preferably between 20 and 65 %. The temperature in hydrolysis preferably falls between 5 and 80°C, more preferably between 20 and 70°C. The time for hydrolysis preferably falls between 5 minutes and 10 hours, more preferably between 10 minutes and 5 hours. To hydrolysis of polyvinyl ester, applicable is any known batch process or continuous process.

PVA thus obtained through hydrolysis of polyvinyl ester is then washed. The washing liquid usable for it includes, for example, methanol, acetone, methyl acetate, hexane and water. Of those, preferred are methanol, methyl acetate and water, which may be used singly or as a mixture of any of them.

Preferably, the amount of the washing liquid to be used generally falls between 2 and 10000 parts by weight, more preferably between 3 and 3000 parts by weight relative to 100 parts by weight of PVA. The temperature in washing preferably falls between 5 and 80°C, more preferably between 20 and 70°C. The time for washing preferably falls between 20 minutes and 10 hours, more preferably between 1 hour and 6 hours. For washing PVA, employable is any known batch process or countercurrent cascade process.

PVA thus produced and washed according to the method as above is acetalized into polyvinyl acetal under an acidic condition in an aqueous solvent according to a known method.

After washed, PVA is dissolved in water to prepare an aqueous PVA solution. Thus obtained, the aqueous vinyl alcohol based polymer solution is acetalized under an acidic condition to give a vinyl acetal based polymer. In general, it is said that the aqueous PVA solution must be prepared according to a method that comprises adding PVA to water at a relatively low temperature of not higher than 40°C, heating it up to 90°C or higher with stirring, preferably up to 93°C or higher, and further stirring it for at least 1 hour. As compared with such a conventional method in this respect, the invention is advantageous in that the time needed in preparing the aqueous PVA solution and the time needed in cooling the aqueous PVA solution to a temperature suitable for acetalization can be shortened and, in addition, the amount of bubbles that may be in the aqueous PVA solution prepared is small and the solution is easy to handle.

The preferred condition in preparing the aqueous PVA solution in the invention varies, depending on the 1,2-glycol bond content, the degree of polymerization and the saponification degree of PVA. When PVA having a saponification degree of at least 99.0 mol% is used, it is desirable that the PVA is put into warm water at 20 to 45°C, then heated up to 80°C or higher, preferably up to 83°C or higher, and stirred at the temperature for at least 1 hour, or after the PVA has been put into warm water at 20 to 45°C, it is heated up to 85°C or higher, preferably up to 90°C or higher, and is stirred at the temperature for at least 30 minutes. Thus prepared, the aqueous PVA solution may be cooled with cold water or the like to a predetermined temperature within a short period of time.

Not specifically defined, PVA may be acetalized in any ordinary method. For it, for example, employable is (a) a method that comprises adding a predetermined amount of aldehyde to an aqueous PVA solution, cooling it to a temperature falling between -10 and 30°C, then adding an acid to it to thereby make the aqueous solution have a pH of at most 1, and starting the acetalization of PVA in that condition; or (b) a method that comprises adding an acid to an aqueous PVA solution to thereby make the solution have a pH of at most 1, then cooling it to a temperature falling between -10 and 30°C, and adding a predetermined amount of aldehyde thereto to start the acetalization of PVA in that condition.

The time for the acetalization generally falls between 1 and 10 hours or so, and the reaction is preferably effected with stirring. If the degree of acetalization of the vinyl acetal based polymer produced according to the method mentioned above could not increase, the reaction may be further continued at an elevated temperature falling between 50 and 80°C or so.

The aldehyde compound to be used for the acetalization includes, for example, formaldehyde, acetaldehyde, propionaldehyde, butylaldehyde, hexylaldehyde and benzaldehyde. These may be used either singly or as a mixture of two or more of them. Preferred examples of the aldehyde compounds are alkylaldehydes having at most 4 carbon

atoms and benzaldehyde, and butylaldehyde is more preferred.

If desired, a carboxylic acid-containing aldehyde compound may be used along with the aldehyde compound as above.

The acid to be used in acetalization includes, for example, inorganic acids such as hydrochloric acid, sulfuric acid, nitric acid, and organic acids such as p-toluenesulfonic acid. These acids may be used either singly or as a mixture of two or more of them.

The granular vinyl acetal based polymer thus deposited through acetalization is neutralized with an aqueous alkali solution, then washed with water and dried to obtain a vinyl acetal based polymer powder. The alkali compound to be used for neutralizing the granular vinyl acetal based polymer includes, for example, alkali metal hydroxides such as sodium hydroxide, potassium hydroxide; and amine compounds such as ammonia, triethylamine, pyridine.

Preferably, the polyvinyl acetal thus obtained herein has a degree of acetalization of at least 40 mol%, especially from 45 to 90 mol%, preferably from 50 to 85 mol%, more preferably from 60 to 80 mol%.

When the polyvinyl acetal of the invention is used for interlayer films for laminated glass, a plasticizer may be added to it. The plasticizer usable herein includes, for example, triethylene glycol di-2-ethylhexanoate, oligoethylene glycol di-2-ethylhexanoate, tetraethylene glycol di-n-heptanoate. Its amount to be added may be from 20 to 100 parts by weight, preferably from 30 to 50 parts by weight relative to 100 parts by weight of the polyvinyl acetal. If the amount of the plasticizer added is smaller than 20 parts by weight, the interlayer films formed for laminated glass will be too tough and they could not be readily cut. However, if the amount thereof is larger than 100 parts by weight, the plasticizer may bleed out.

For controlling the adhesiveness between the interlayer film and glass sheets to be laminated, any known metal salt of a carboxylic acid having from 2 to 10 carbon atoms may be added to the polyvinyl acetal. The metal salt includes alkali metal salts and alkaline earth metal salts with, for example, sodium, potassium or magnesium. The amount of the metal salt of a carboxylic acid having from 2 to 10 carbon atoms that may be added to the polyvinyl acetal is preferably from 1 to 200 ppm, more preferably from 10 to 150 ppm.

If desired, the polyvinyl acetal of the invention may contain any known ordinary additives such as UV absorbent, light stabilizer, antioxidant, surfactant, colorant.

For producing interlayer films for laminated glass by the use of the polyvinyl acetal of the invention, for example, employable is a method of adding a predetermined amount of plasticizer and any other additive to polyvinyl acetal, uniformly kneading them and shaping the resulting mixture into sheets in a mode of extrusion, calendering, pressing, casing or inflation.

The thickness of the interlayer film for laminated glass may fall generally between 0.3 and 1.6 mm, and the interlayer film may have a single-layered structure or a laminated structure of two or more layers.

Methods of using the interlayer films formed of the polyvinyl acetal of the invention in producing laminated glass are not specifically defined herein. For example, the interlayer film is sandwiched between two transparent glass sheets, and this is put into a rubber bag, pre-bonded together under reduced pressure for suction at a temperature of about 70 to 110°C, and then finally bonded in an autoclave at a temperature of about 120 to 150°C under a pressure of about 1 to 1.5 MPa. The process gives the intended laminated glass.

The sheet glass to be used for the laminated glass is not specifically defined, including, for example, inorganic transparent sheet glass such as float sheet glass, polished sheet glass, die plate glass, meshed sheet glass, wired sheet glass, heat ray-absorbent sheet glass, colored sheet glass; and organic transparent plastic sheets such as polycarbonate sheets, polymethyl methacrylate sheets.

When the polyvinyl acetal of the invention is used for binders for ceramic forming and when ceramic powder is molded with it, an organic solvent is generally used, and, if desired, a plasticizer may also be used along with it. Examples of the organic solvent are alcohols such as methanol, ethanol, isopropanol, n-propanol, butanol; cellosolves such as methyl cellosolve, butyl cellosolve; ketones such as acetone, methyl ethyl ketone; aromatic hydrocarbons such as toluene, xylene; and halogenohydrocarbons such as dichloromethane; chloroform. One or more of these may be used herein either singly or as combined.

Examples of the plasticizer are tri or tetraethylene glycol dicarboxylates such as triethylene glycol di-2-ethylhexanoate, tetraethylene glycol di-2-ethylhexanoate, triethylene glycol di-n-heptanoate, tetraethylene glycol di-n-heptanoate; and dicarboxylates such as dioctyl adipate, dibutyl adipate, dioctyl phthalate, dibutyl phthalate. One or more of these may be used herein either singly or as combined.

The ceramic powder may be powder of metal or non-metal oxide or non-oxide for production of ceramics. Its examples are oxides, carbides, nitrides, borides and sulfides with any of Li, K, Mg, B, Al, Si, Cu, Ca, Sr, Ba, Zn, Cd, Ga, In, Y, lanthanoid, actinoid, Ti, Zr, Hf, Bi, V, Nb, Ta, W, Mn, Fe, Co, Ni. Examples of powdery oxides with multiple metal elements that are generally referred to as double oxides are classified from their crystal structures. Perovskite-structured double oxides include $NaNbO_3$, $SrZrO_3$, $PbZrO_3$, $SrTiO_3$, $BaZrO_3$, $PbTiO_3$, $BaTiO_3$; spinel-structured double oxides include $MgAl_2O_4$, $ZnAl_2O_4$, $CoAl_2O_4$, $NiAl_2O_4$, $MgFe_2O_4$; ilmenite-structured double salts include $MgTiO_3$, $MnTiO_3$, $FeTiO_3$; and garnet-structured double salts include $GdGa_5O_{12}$, $Y_6Fe_5O_{12}$. These powdery ceramics may be

used herein either singly or as combined.

One preferred method of molding ceramic powder by the use of the polyvinyl acetal of the invention for a binder for ceramic forming is a sheet-forming method, and it comprises applying a slurry of essentially organic solvent, ceramic powder and polyvinyl acetal, onto a carrier film by the use of a blade coater or the like, then drying it, and peeling it from the carrier film to obtain a ceramic green sheet. In this method, the slurry to be applied to the carrier film may optionally contain deflocculant, plasticizer, lubricant and the like, in addition to the essential ingredients of organic solvent, ceramic powder and polyvinyl acetal.

The amount of the polyvinyl acetal to be in the ceramic green sheet could not be unconditionally defined as it varies depending on the use and the object of the ceramic green sheet. Generally, however, it may be from 3 to 20 parts by weight, preferably from 5 to 15 parts by weight relative to 100 parts by weight of the ceramic powder.

When ceramic powder is molded according to the method mentioned above, it must be well dispersed in the slurry thereof. Methods of dispersing ceramic powder in slurry are not specifically defined, and various methods may be employed for it. For example, employable is a method of using a medium-assisted dispersing machine such as bead mill, ball mill, attritor, paint shaker, sand mill; a method of solid kneading; or a method of using a three-roll kneader. If desired, a dispersant may be used for dispersing ceramic powder in slurry. The dispersant may be an anionic dispersant having a carboxylic acid group, maleic acid group, a sulfonic acid group or a phosphoric acid group in the molecule. Preferably, the anionic dispersant does not have a metal ion.

The thickness of the ceramic green sheet could not be unconditionally defined as it varies depending on the use and the object thereof. In general, however, it falls between 1 and 300 μm. The drying temperature at which the coating film formed on the carrier film is dried could not also be unconditionally defined as it varies depending on the thickness and other parameters of the ceramic green sheet to be obtained. In general, however, it may fall between 60 and 200°C or so.

The ceramic green sheets obtained by molding ceramic powder along with the polyvinyl acetal of the invention that serves as a binder for ceramic forming are favorable for various electronic parts. In particular, they are favorable for chip-type monolithic capacitors that are fabricated by forming an electrode on a ceramic green sheet, piling up them and bonding them under pressure, and baking both the electrode and the ceramic at the same time, and also for IC chip circuit boards.

When the polyvinyl acetal of the invention is used for binders for ink or paint, the polyvinyl acetal content of ink or paint is preferably from 1 to 35 % by weight, more preferably from 5 to 25 % by weight. Ink and paint may contain, for example, from 5 to 25 % by weight of pigment, from 5 to 25 % by weight of polyvinyl acetal, and some solvent.

The pigment to be in ink or paint may be any and every known organic or inorganic pigment. The solvent that may be in ink or paint includes, for example, alcohols such as ethyl alcohol, and esters such as ethyl acetate.

The binder for ink or paint that comprises the polyvinyl acetal of the invention may be combined with any other extender resin and auxiliary agent. The polyvinyl acetal of the invention may serve by itself as an additive to ink.

Using the binder for ink or paint of the invention brings about the following advantages: The viscosity of the solution obtained by adding one or more pigments to a solution of the binder followed by kneading the resulting pigment paste is lower than the solution viscosity that is estimated from the viscosity of the polyvinyl acetal itself. Therefore, compared with a binder for ink or paint that comprises a known polyvinyl acetal, the binder for ink or paint that comprises the polyvinyl acetal of the invention significantly lowers the solution viscosity. This means that the binder that comprises the polyvinyl acetal of the invention reduces the necessary amount of varnish or solvent to be used in controlling the viscosity of ink or paint, and it increases the acceptable pigment content of ink or paint. As a result, the binder for ink or paint of the invention satisfies the requirements heretofore needed for ink and paint in that it may increase the degree of coloration while keeping the optimum viscosity as it is, or it may lower the viscosity not changing the degree of coloration.

The thermally-developable photosensitive material that comprises the polyvinyl acetal of the invention may be fabricated by applying a coating liquid which comprises polyvinyl acetal, organic silver salt and/or photosensitive silver halide, reducing agent and solvent, onto a support and optionally crosslinking it with an isocyanate group-having compound.

The amount of the organic silver salt to be in the photographic material is preferably from 1 to 500 parts by weight, more preferably from 2 to 50 parts by weight relative to 10 parts by weight of the polyvinyl acetal therein. Also preferably, the organic silver salt has a particle size of from 0.01 to 10 μm, more preferably from 0.1 to 5 μm. The organic silver salt is not specifically defined, and it may be any and every colorless or white silver salt that is relatively stable to light and is capable of being reduced with a reducing agent in the presence of an exposed silver halide at a temperature not lower than 80°C to give a metal silver. Examples of the organic silver salt are silver salts of mercaptans such as 3-mercapto-4-phenyl-1,2,4-triazole, 2-mercapto-5-aminothiazole, 1-phenyl-5-mercaptotetrathiazole, 2-mercaptobenzothiazole, mercaptoxadiazole, mercaptotriazine; silver salts of thione compounds such as thioamide, thiopyridine, S-2-aminophenylthiosulfuric acid; silver salts of organic carboxylic acids, such as aliphatic carboxylic acids, capric acid, lauric acid, myristic acid, palmitic acid, stearic acid, behenic acid, maleic acid, fumaric acid, tartaric acid,

furoylic acid, linolic acid, oleic acid, hydroxystearic acid, adipic acid, sebacic acid, succinic acid, acetic acid, butyric acid, camphoric acid, dithiocarboxylic acids such as dithioacetic acid, thioglycolic acid, aromatic carboxylic acids, thione-carboxylic acids, thioether group-having aliphatic carboxylic acids; silver salts of imidazoles such as 2-mercaptobenzimidazole; silver salts of tetrazaindenes; silver-containing metallic aminoalcohols, organic acid-silver chelate compounds. Of those, preferred are silver salts of aliphatic carboxylic acids; and more preferred is silver behenate.

The amount of the photosensitive silver halide to be in the photographic material is preferably from 0.0005 to 0.2 parts by weight, more preferably from 0.01 to 0.2 parts by weight relative to 100 parts by weight of the organic silver salt therein. The photosensitive silver halide is not specifically defined, and may be any one capable of reacting with an organic silver salt to form a silver halide. In view of is reactivity, preferred are iodide ion-containing silver halides. Examples of the silver halide are silver bromide, silver iodide, silver chloride, silver chlorobromide, silver iodobromide, silver chloroiodide.

An organic silver salt may be combined with a photosensitive silver halide to be in the photosensitive materials of the invention. In this case, the photosensitive silver halide may catalytically act on the organic silver salt. Methods for contacting a photosensitive silver halide with an organic silver salt are not specifically defined. For it, for example, employable is a method of making a photosensitive silver halide-forming component react with a previously-prepared solution or dispersion of an organic silver salt or a film with an organic silver salt therein, to thereby convert a part of the organic silver salt into silver halide.

The amount of the reducing agent to be in the photosensitive material is preferably from 0.0001 to 3 parts by weight, more preferably from 0.01 to 1 part by weight relative to 100 parts by weight of the organic silver salt therein. Not specifically defined, the reducing agent may be suitably selected depending on the type of the organic silver salt to be used in the photosensitive material. Examples of the reducing agent are substituted phenols, bisphenols, naphthols, bisnaphthols, polyhydroxybenzenes, di or polyhydroxynaphthols, di or polyhydroxynaphthalenes, hydroquinones, hydroquinone monoethers, ascorbic acid and its derivatives, reducing saccharides, aromatic amino compounds, hydroxyamines, hydrazines, phenidones, hindered phenols. Of those, preferred are photolytic or pyrolytic reducing agents, and more preferred are hindered phenols. If desired, a photolytic reducing agent may be combined with a photolysis promoter, or a masking agent that retards the reaction between the organic silver salt and the reducing agent may be used along with the reducing agent.

The solvent that is used in preparing the coating liquids for the thermally-developable photosensitive material may be any one capable of dissolving the polyvinyl acetal of the invention, and is not specifically defined. Examples of the solvent are ketones such as diethyl ketone, methyl ethyl ketone, methyl isobutyl ketone; and esters such as methyl acetate, ethyl acetate, propyl acetate. The water content of the solvent is preferably as small as possible.

For preparing a coating liquid that comprises polyvinyl acetal, organic silver salt and/or photosensitive silver halide, reducing agent and solvent, for example, these components are dispersed in a ball mill or the like for at least 12 hours, then a reducing agent is added thereto, and the resulting mixture is further dispersed for a few hours.

Thus prepared, the coating liquid is applied onto a support, for which employable is any known coating method. For example, a method of using a wire bar, and a method of using a blade coater are employable. The amount of the coating liquid to be on the support is preferably from 0.1 to 5 g/m$^2$, more preferably from 0.3 to 3 g/m$^2$ in terms of the dispersion amount of silver in the coating film formed. If the amount of the coating liquid is smaller than 0.1 g/m$^2$, the image density of the developed material may lower; but even if larger than 5 g/m$^2$, the image density of the developed material could no more increase.

The support to be coated with the coating liquid is not specifically defined, including, for example, resin films of polyesters such as polyethylene terephthalate, polyethylene naphthalate; carbonates such as polycarbonate; olefins such as polyethylene, polypropylene; celluloses such as cellulose triacetate, cellulose diacetate; acetals such as polyvinyl acetal; halogen-containing polymers such as polyvinyl chloride, polypropylene chloride; as well as metal plates of aluminium or the like; and glass, paper.

The thermally-developable photosensitive material may contain any other additive such as color-toning agent. For forming black images, a black-toning agent is added to it. For forming color images, color coupler, leuco dye or the like is added to it. Further if desired, the thermally-developable photosensitive material may contain an optical sensitizer.

As having the advantages as above, the polyvinyl acetal of the invention is usable for interlayer films for laminated glass, binders for ceramic forming, binders for ink or paint, and thermally-developable photosensitive materials. In addition to these, the polyvinyl acetal is also favorable for a component of lacquer, or for crosslinking with urea resins, melamine resins or epoxy resins.

The invention is illustrated in more detail below by examples and comparison examples, without intending to limit the invention to these examples.

Example 1

2500 g of vinyl acetate was fed into a 5-liter pressure reactor equipped with a stirrer, a nitrogen inlet duct, an initiator inlet mouth and a delay solution inlet mouth, then heated up to 60°C, and then bubbled with nitrogen gas for 30 minutes to purge the system with nitrogen. An initiator, 2,2'-azobis(cyclohexane-1-carbonitrile) was dissolved in methanol to prepare a solution having a concentration of 0.03 g/liter, and this was bubbled with nitrogen gas to purge it with nitrogen. The inner temperature of the reactor was controlled at 120°C, and 8 ml of the initiator solution was led into the reactor to initiate the polymerization of the monomer. During the polymerization, the system temperature was kept at 120°C, and the initiator solution was continuously added to the system at a rate of 45 ml/hr. After 3.5 hours when the conversion reached 35 %, the reactor was cooled to stop the polymerization therein. Next, methanol was intermittently introduced into it under reduced pressure at 30°C to remove the non-reacted vinyl acetate monomer. The process gave a methanol solution of polyvinyl acetate (concentration 40 %).

To the methanol solution that contains 40 % of polyvinyl acetate, added were a predetermined methanol and a methanol solution that contains 10 % by weight of sodium hydroxide in that order, and the polymer was hydrolyzed at 40°C. At the start of hydrolysis, the solid concentration of polyvinyl acetate in the solution was 30 % by weight. Adding the sodium hydroxide-containing methanol solution was effected with stirring, and the amount of sodium hydroxide added was 0.03 in terms of the molar ratio to the vinyl acetate units in the polyvinyl acetate. The gel product obtained in about 2 minutes after the start of the addition of the sodium hydroxide-containing methanol solution was ground in a mill, and left at 40°C for 1 hour to promote the hydrolysis. Next, methyl acetate was added to it to neutralize the remaining alkali. With a phenolphthalein indicator, the finish of neutralization was confirmed, and then a white PVA solid was taken out through filtration. Methanol of 5 times was added to the thus-obtained PVA solid and left at room temperature for 3 hours to wash the PVA solid. The washing operation was repeated three times. Thus washed, the PVA solid was dewatered through centrifugation, and then dried in a drier at 70°C for 1 day. The PVA had a degree of saponification of 98.4 mol%.

530 g of PVA was put into 6100 ml of water at 30°C, and dissolved therein under heat up to 85°C with stirring. Butylaldehyde was added to it in a ration butylaldehyde to PVA of 0,572 and dispersed therein, and then this was cooled to 14°C. Then, 80 g of aqueous 20 % hydrochloric acid solution was added to it to initiate the reaction of the compounds. Kept at 14°C, the aqueous solution was dropwise added to the system over a period of 20 minutes. After the addition of the aqueous hydrochloric acid solution, the reaction was continued for 40 minutes still at 14°C, and then 360 g of aqueous 20 % hydrochloric acid solution was dropwise added to it over a period of 30 minutes. After the addition, this was heated up to 65°C at a heating rate of about 0.6°C/min, and then kept at 65°C for 60 minutes. After the reaction, the reaction solution was cooled to room temperature, and the granular solid thus deposited was taken out through filtration and well washed with water. To neutralize it, the thus-washed granular solid was put into aqueous 0.3 % potassium hydroxide solution, and this was then gently heated up to 70°C. The granular solid was taken out of the aqueous potassium hydroxide solution, washed with water to remove the excess alkali, and then dried. The process gave a vinyl acetal based polymer. The degree of butyralization of the thus-obtained vinyl butyral based polymer was 72.0 mol%.

The content of 5-membered acetal rings was 2.2 %, which content was determined according to the NMR-method mentioned above.

The molecular weight of the polyvinyl butyral is determined by gel permeation chromatography (GPC), using RI detectors. The detectors are calibrated using PVB calibration standards whose absolute values are determined by static light scattering. The value measured is given in g/mol.

The molecular weight $M_w$ of the polyvinyl butyral was 117300 g/mol before kneading. To test the degradation under stress, the polyvinyl butyral was kneaded in a "Rheomix" mixer (model 500, type ELEC; Haake) at 210°C and 18 rpm for 10 and 40 minutes, respectively. The data obtained are given in Table 1.

Comparison Example 1

The comparison experiment was carried out by analogy with the example 1, using a polymerization temperature of 60°C instead of 120°C. The PVA obtained had a degree of saponification of 98.2%.

The degree of butyralization of the -obtained vinyl butyral based polymer obtained by acetalization according to the method mentioned in Example 1 was 71.9 mol%.

The content of 5-membered acetal rings was 1.2 %, which content was determined according to the NMR-method mentioned above.

The molecular weight $M_w$ of the polyvinyl butyral was 116100 g/mol before kneading. To test the degradation under stress, the polyvinyl butyral was kneaded at 210°C and 18 rpm for 10 and 40 minutes, respectively. The data obtained are given in Table 1.

Table 1

| | $M_w$ before kneading | $M_w$ after 10 minutes kneading | $M_w$ after 40 minutes kneading |
|---|---|---|---|
| Example 1 | 117,300 | 99,700 | 89,900 |
| Comparison Example 1 | 116,100 | 98,300 | 85,000 |

## Claims

1. A vinyl acetal based polymer obtainable through acetalization of a vinyl alcohol based polymer that has a degree of polymerization of from 100 to 8000 and a saponification degree of from 80 to 99.99 mol%, wherein the vinyl acetal based polymer comprises at least 1.3 mol% of 5-membered acetal rings.

2. The vinyl acetal based polymer according to claim 1, wherein the vinyl acetal based polymer comprises from 1.5 to 3.5 mol% of 5-membered acetal rings.

3. The vinyl acetal based polymer according to claim 1 or 2, wherein the polyvinyl acetal has a degree of acetalization of from 45 to 80 mol%.

4. The vinyl acetal based polymer according to one of the claims 1 to 3, wherein the molar ratio of the 5-membered acetal rings to the 6-membered acetal rings ranges from 0.015 to 0.035.

5. The vinyl acetal based polymer according to one of the claims 1 to 4, wherein the vinyl acetal based polymer contains from 0.01 to 15 mol% of $\alpha$-olefin units.

6. The vinyl acetal based polymer according to claim 4, wherein the molar ratio of the 5-membered acetal rings to the $\alpha$-olefin units ranges from 2:1 to 1:15.

7. The vinyl acetal based polymer according to one of the claims 1 to 6, wherein the vinyl acetal based polymer contains from 0.02 to 5 mol% of carboxylic acid and/or lactone ring groups.

8. The vinyl acetal based polymer according to claim 7, wherein the molar ratio of the 5-membered acetal rings to the carboxylic acid and/or lactone ring groups ranges from 100:1 to 1:2.

9. The vinyl acetal based polymer according to claim 7 or 8, wherein the molar ratio of the $\alpha$-olefin units to carboxylic acid and/or lactone ring groups ranges from 100:1 to 1:5.

10. The vinyl acetal based polymer according to one of the claims 1 to 9, wherein the vinyl acetal based polymer contains units being derived from hydroxyl group-having vinyl ethers.

11. The vinyl acetal based polymer according to claim 10, wherein the molar ratio of the 5-membered acetal rings to units being derived from hydroxyl group-having vinyl ethers ranges from 1:1 to 1:30.

12. A method for producing a vinyl acetal based polymer, which comprises dissolving a vinyl alcohol based polymer that has a 1,2-glycol bond content of at least 1.5 mol%, a polymerization degree of from 100 to 8000 and a saponification degree of from 80 to 99.99 mol%, in water to prepare an aqueous solution of the vinyl alcohol based polymer, followed by acetalizing the aqueous solution of vinyl alcohol based polymer.

13. An interlayer film for laminated glass, which comprises, as the essential ingredient, a polyvinyl acetal according to any of the claims 1 to 11.

14. Laminated glass fabricated by the use of the interlayer film of claim 12.

15. A binder for ceramic forming, which comprises a polyvinyl acetal according to any of the claims 1 to 11.

16. A binder for ink or paint, which comprises a polyvinyl acetal according to any of the claims 1 to 11.

**17.** A thermally-developable photographic material, which comprises a polyvinyl acetal of according to any of the claims 1 to 11.

European Patent Office

# EUROPEAN SEARCH REPORT

Application Number
EP 04 00 1287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 670 507 A (DHILLON MAJOR S ET AL) 2 June 1987 (1987-06-02) * column 2, line 26 - column 7, line 36; claims; examples * ----- | 1-3 | B32B27/28 C08F8/28 |
| X | EP 0 216 083 A (HOECHST CO AMERICAN) 1 April 1987 (1987-04-01) * abstract; examples * * page 3, line 1 - page 15, line 38; claims * ----- | 1-3 | |
| E | EP 1 384 731 A (KURARAY CO) 28 January 2004 (2004-01-28) * the whole document * * abstract * * paragraphs [0017] - [0123]; examples; tables * ----- | 1-17 | |
| E | EP 1 384 730 A (KURARAY CO) 28 January 2004 (2004-01-28) * pages 34-40 * ----- | 1-3, 12-17 | TECHNICAL FIELDS SEARCHED (Int.Cl.7) |
| X | DATABASE WPI Section Ch, Week 199715 Derwent Publications Ltd., London, GB; Class A14, AN 1997-161522 XP002284961 & JP 09 031124 A (SEKISUI CHEM IND CO LTD) 4 February 1997 (1997-02-04) * abstract * ----- | 1-4, 13-15 | B32B C08F |
| X | US 4 808 508 A (PLATZER STEPHAN J W) 28 February 1989 (1989-02-28) * examples * ----- | 1-3 | |
| A | US 6 555 291 B1 (HAUCK CELIN S) 29 April 2003 (2003-04-29) * the whole document * ----- -/-- | 1-17 | |

The present search report has been drawn up for all claims

3

| Place of search | Date of completion of the search | Examiner |
|---|---|---|
| Munich | 17 June 2004 | Hutton, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

European Patent Office

# EUROPEAN SEARCH REPORT

Application Number
EP 04 00 1287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 541 181 B1 (LEVANON MOSHE ET AL) 1 April 2003 (2003-04-01) * the whole document * ----- | 1-17 | |

TECHNICAL FIELDS SEARCHED (Int.Cl.7)

The present search report has been drawn up for all claims

3

| Place of search | Date of completion of the search | Examiner |
|---|---|---|
| Munich | 17 June 2004 | Hutton, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 00 1287

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2004

| Patent document cited in search report | | Publication date | Patent family member(s) | | | Publication date |
|---|---|---|---|---|---|---|
| US 4670507 | A | 02-06-1987 | CA | 1276048 | C | 06-11-1990 |
| | | | DE | 3676605 | D1 | 07-02-1991 |
| | | | EP | 0216083 | A1 | 01-04-1987 |
| | | | JP | 1917019 | C | 23-03-1995 |
| | | | JP | 6043451 | B | 08-06-1994 |
| | | | JP | 62096506 | A | 06-05-1987 |
| | | | US | 4665124 | A | 12-05-1987 |
| EP 0216083 | A | 01-04-1987 | US | 4670507 | A | 02-06-1987 |
| | | | CA | 1276048 | C | 06-11-1990 |
| | | | DE | 3676605 | D1 | 07-02-1991 |
| | | | EP | 0216083 | A1 | 01-04-1987 |
| | | | JP | 1917019 | C | 23-03-1995 |
| | | | JP | 6043451 | B | 08-06-1994 |
| | | | JP | 62096506 | A | 06-05-1987 |
| | | | US | 4786582 | A | 22-11-1988 |
| | | | US | 4665124 | A | 12-05-1987 |
| EP 1384731 | A | 28-01-2004 | EP | 1384731 | A1 | 28-01-2004 |
| | | | JP | 2004068013 | A | 04-03-2004 |
| | | | US | 2004024137 | A1 | 05-02-2004 |
| EP 1384730 | A | 28-01-2004 | CN | 1477132 | A | 25-02-2004 |
| | | | EP | 1384730 | A1 | 28-01-2004 |
| | | | JP | 2004068012 | A | 04-03-2004 |
| | | | JP | 2004068014 | A | 04-03-2004 |
| JP 9031124 | A | 04-02-1997 | NONE | | | |
| US 4808508 | A | 28-02-1989 | CA | 1300957 | C | 19-05-1992 |
| | | | DE | 3720687 | A1 | 14-01-1988 |
| | | | GB | 2193334 | A ,B | 03-02-1988 |
| | | | JP | 63014144 | A | 21-01-1988 |
| | | | US | 4929532 | A | 29-05-1990 |
| | | | US | 5053310 | A | 01-10-1991 |
| US 6555291 | B1 | 29-04-2003 | EP | 1311394 | A1 | 21-05-2003 |
| | | | JP | 2004506247 | T | 26-02-2004 |
| | | | WO | 0214071 | A1 | 21-02-2002 |
| | | | US | 6649324 | B1 | 18-11-2003 |
| US 6541181 | B1 | 01-04-2003 | US | 6255033 | B1 | 03-07-2001 |
| | | | AU | 762482 | B2 | 26-06-2003 |
| | | | AU | 6311500 | A | 19-02-2001 |
| | | | CA | 2380570 | A1 | 08-02-2001 |
| | | | DE | 1208014 | T1 | 09-01-2003 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 00 1287

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2004

| Patent document cited in search report | Publication date | Patent family member(s) | Publication date |
|---|---|---|---|
| US 6541181 B1 | | DE 60009923 D1 | 19-05-2004 |
| | | EP 1208014 A2 | 29-05-2002 |
| | | WO 0109682 A2 | 08-02-2001 |
| | | JP 2003530581 T | 14-10-2003 |

EPO FORM P0459

For more details about this annex : see Official Journal of the European Patent Office, No. 12/82